# EUROPEAN PATENT APPLICATION

(11) **EP 4 568 416 A1**
(43) Date of publication of application: **11.06.2025**
(21) Application number: 23849896.8
(22) Date of filing: 20.07.2023
(51) Int. Cl.: H04W 76/15, H04L 27/26, H04W 16/28, H04W 84/12

(54) **COMMUNICATION DEVICE, COMMUNICATION METHOD, AND PROGRAM**

(30) Priority: 04.08.2022 JP 2022125086
(71) Applicant: CANON KABUSHIKI KAISHA, Tokyo 146-8501 (JP)
(72) Inventor: YOSHIKAWA Yuki, Tokyo 146-8501 (JP)
(74) Representative: Canon Europe Limited
(86) International application number: PCT/JP2023/026490
(87) International publication number: WO 2024/029341

(57) **Abstract**

When establishing a link via a frequency channel in a millimeter-wave band, a communication apparatus executes a process for selecting an antenna for communicating with an other communication apparatus, and transmits a request frame including information acquired through the executed process to the other communication apparatus.

## Description

### Technical Field

The present invention relates to a communication apparatus compliant with IEEE 802.11.

### Background Art

The recent increase in the amount of data to be communicated has prompted the development of communication technologies such as wireless LAN (Local Area Network). The IEEE (Institute of Electrical and Electronics Engineers) 802.11 standard series is known as major wireless LAN communication standards. The IEEE 802.11 standard series includes standards such as IEEE 802.11a/b/g/n/ac/ax/be (PTL 1).

For example, under the IEEE 802.11be standard, Multi-Link communication is being considered in which, for example, one AP (Access Point) establishes a plurality of links with one STA (Station) via a plurality of different frequency channels and performs communication in parallel. Two or more links may be selected from the same frequency band (any of the 2.4 GHz band, the 3.6 GHz band, the 4.9 and 5 GHz bands, and the 6 GHz band) or from different frequency bands. An AP and a STA supporting Multi-Link communication are referred to as an AP MLD (Multi-Link Device) and a STA MLD, respectively.

In the successor standard of IEEE 802.11be, the use of millimeter waves such as those in the 45 GHz band or the 60 GHz band for Multi-Link communication is being considered for further improvement of communication performance.

### Citation List

### Patent Literature

PTL 1: Japanese Patent Laid-Open No. 2018-50133

### Summary of Invention

### Technical Problem

As described above, the use of the millimeter-wave band for Multi-Link communication is being considered. However, the previous standards for wireless LANs do not define a mechanism for Multi-Link communication using the millimeter-wave band.

Accordingly, in view of the problem described above, the present invention provides a mechanism for Multi-Link communication using the millimeter-wave band.

### Solution to Problem

To this end, a communication apparatus according to an aspect of the present invention includes establishment means for establishing a plurality of links with an other communication apparatus via a frequency channel, execution means for executing a process for selecting an antenna for communicating with the other communication apparatus when the establishment means establishes a link via a frequency channel in a millimeter-wave band, and transmission means for transmitting a request frame including information acquired by the execution means to the other communication apparatus.

### Advantageous Effects of Invention

It is possible to provide a mechanism for Multi-Link communication using the millimeter-wave band.

### Brief Description of Drawings

[Fig. 1] Fig. 1 is a diagram illustrating an example network configuration.
[Fig. 2] Fig. 2 is a diagram illustrating an example hardware configuration of an AP and a STA.
[Fig. 3] Fig. 3 is a diagram illustrating an example functional configuration of the AP and the STA.
[Fig. 4] Fig. 4 is a flowchart diagram of a connection process according to an embodiment.
[Fig. 5] Fig. 5 is a sequence diagram according to the embodiment.
[Fig. 6] Fig. 6 illustrates an example configuration of a Multi-Link Element according to the embodiment.
[Fig. 7] Fig. 7 illustrates an example configuration of an OCI Element according to the embodiment.

### Description of Embodiments

An embodiment of the present invention will be described in detail hereinafter with reference to the accompanying drawings.

### (Configuration of Wireless Communication System)

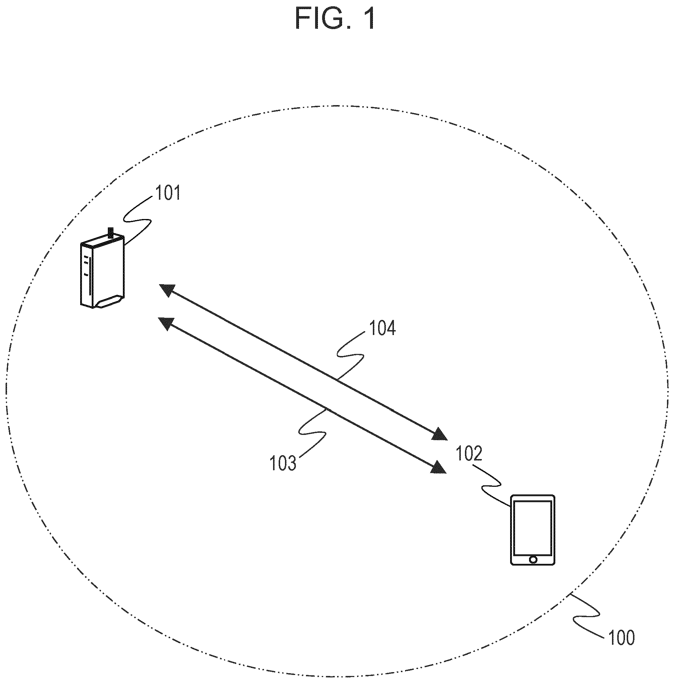

Fig. 1 illustrates an example network configuration according to the present embodiment. Fig. 1 illustrates a configuration in which a STA (STA 102) participates in a network 100 established by an access point (AP 101). The STA 102 can transmit and receive signals that the AP 101 transmits and receives. The present embodiment is applicable to the AP 101.

The AP 101 and the STA 102 can perform wireless communication compliant with the IEEE 802.11 UHR (Ultra High Reliability) standard, which is a successor standard of IEEE 802.11be. IEEE stands for Institute of Electrial and Electronics Engineers. Each communication apparatus can perform communication at a frequency in the 2.4 GHz band, the 3.6 GHz band, the 5 GHz band, the 6 GHz band, or a so-called millimeter-wave band, namely, the 45 GHz band or the 60 GHz band. The frequency bands usable by each communication apparatus are not limited to these, and each communication apparatus may use a different frequency band, for example, the Sub1 GHz band. The AP 101 and the STA 102 can perform communication using bandwidths of 20 GHz, 40 MHz, 80 MHz, 160 MHz, 320 MHz, 540 MHz, 640 MHz, 1080 MHz, and 2160 MHz. The bandwidths usable by each communication apparatus are not limited to these, and each communication apparatus may use different bandwidths, for example, 240 MHz and 4 MHz.

In the foregoing description, the AP 101 and the STA 102 support the IEEE 802.11 UHR standard. In addition to this standard, the AP 101 and the STA 102 may support legacy standards that are standards prior to the IEEE 802.11 UHR standard. Specifically, the AP 101 and the STA 102 may support at least one of the IEEE 802.11a/b/g/n/ac/ax/be standards. The AP 101 and the STA 102 may also support, in addition to the IEEE 802.11 series standards, any other communication standard such as Bluetooth (registered trademark), NFC, UWB, ZigBee, or MBOA. UWB stands for Ultra Wide Band, and MBOA stands for Multi Band OFDM Alliance. NFC stands for Near Field Communication. UWB includes Wireless USB, Wireless 1394, WiNET, and so on. The AP 101 and the STA 102 may also support a communication standard for wired communication such as wired LAN communication. Specific examples of the AP 101 include, but are not limited to, wireless LAN routers and personal computers (PCs). Alternatively, the AP 101 may be an information processing device such as a wireless chip capable of performing wireless communication compliant with the IEEE 802.11 UHR standard. Specific examples of the STA 102 include, but are not limited to, cameras, tablets, smartphones, PCs, mobile phones, video cameras, and headsets. Alternatively, the STA 102 may be an information processing device such as a wireless chip capable of performing wireless communication compliant with the IEEE 802.11 UHR standard.

The AP 101 and the STA 102 perform Multi-Link communication by establishing links via a plurality of frequency channels and communicating. An AP that performs Multi-Link communication is also referred to as an AP MLD (Multi-Link Device). For example, the AP 101 can establish a link 103 with the STA 102 via a first frequency channel in the 5 GHz band and communicate with the STA 102. In parallel to this, the STA 102 can establish a link 104 with the AP 102 via a second frequency channel in the 45 GHz band and communicate with the AP 102. In this case, the STA 102 performs Multi-Link communication in which the second link 104 via the second frequency channel is maintained in parallel with the link 103 via the first frequency channel. As described above, by establishing links with the STA 102 via a plurality of frequency channels, the AP 101 can provide improved throughput in communication with the STA 102.

As links between communication devices, a plurality of links in different frequency bands may be established in Multi-Link communication. For example, the AP 101 and the STA 102 may establish a third link in the 60 GHz band in addition to the link 103 in the 5 GHz band and the link 104 in the 45 GHz band. Alternatively, the AP 101 and the STA 102 may establish links via a plurality of different channels included in the same frequency band. For example, in addition to channel 1 in the 45 GHz band as a first link, channel 11 in the 45 GHz band may be established as a second link. A mixture of links in the same frequency band and links in different frequency bands may be used. For example, the AP 101 and the STA 102 may establish a link on channel 35 in the 60 GHz band and a link on channel 15 in the 6 GHz band in addition to the link 103 on channel 2 in the 60 GHz band. By establishing a plurality of connections having different frequencies with the STA 102, the AP 101 can establish communication with the STA 102 in a band other than a certain band that is congested. Thus, it is possible to prevent a decrease in throughput and communication delays in communication between with the AP 101 and the STA 102.

Each link is assigned a Link ID for each network over which the link is constructed. For example, consideration is given to a case where the STA 102 participates in a 5 GHz band network among networks constructed by the AP 101. When a link constructed with the AP 101 is the link 103, this link is assigned a common Link ID = 1. Likewise, when the STA 102 participates in a 45 GHz band network and a link constructed over the network is the link 104, this link is assigned Link ID = 2. The values are examples, and other values may be assigned, or a Link ID may be assigned to each constructed link or each STA.

In the IEEE 802.11 series standards, the bandwidth of each frequency channel in the 2.4 GHz, 5 GHz, and 6 GHz bands is defined as 20 MHz. The bandwidth of each frequency channel in the 45 GHz band is defined as 540 MHz, and the bandwidth of each frequency channel in the 60 GHz band is defined as 1080 MHz or 2160 MHz. The term "frequency channel", as used herein, refers to a frequency channel defined in the IEEE 802.11 series standards, and a plurality of frequency channels are defined in each frequency band of the 2.4 GHz band, the 5 GHz band, the 6 GHz band, the 45 GHz band, and the 60 GHz band. Bonding of adjacent frequency channels may be performed to use a bandwidth greater than or equal to 40 MHz in one frequency channel.

### (Configurations of AP and STA)

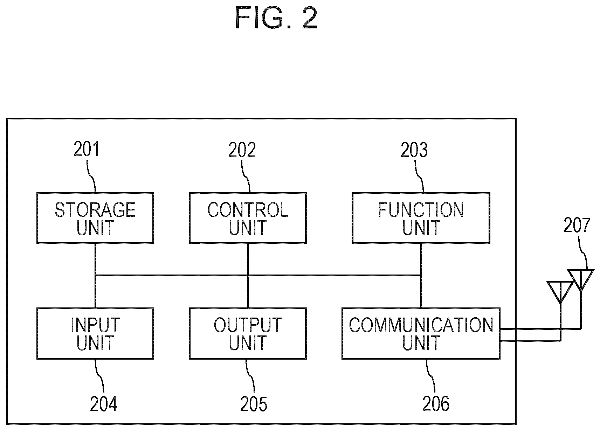

Fig. 2 illustrates an example hardware configuration of the STA 102 according to the present embodiment. The STA 102 includes a storage unit 201, a control unit 202, a function unit 203, an input unit 204, an output unit 205, a communication unit 206, and an antenna 207. A plurality of antennas may be included.

The storage unit 201 includes one or more memories such as a ROM or a RAM, and stores a computer program for performing various operations described below and various kinds of information such as communication parameters for wireless communication. ROM stands for Read Only Memory, and RAM stands for Random Access Memory. In addition to a memory such as a ROM or a RAM, any other storage medium such as a flexible disk, a hard disk, an optical disk, a magneto-optical disk, a CD-ROM, a CD-R, a magnetic tape, a non-volatile memory card, or a DVD may be used as the storage unit 201. The storage unit 201 may include a plurality of memories or the like.

The control unit 202 includes one or more processors such as a CPU or an MPU, for example. The control unit 202 executes the computer program stored in the storage unit 201 to control the entire AP 101. The control unit 202 may control the entire AP 101 by cooperation of the computer program stored in the storage unit 201 and an OS (Operating System). Further, the control unit 202 generates data and signals (radio frames) to be transmitted in communication with another communication apparatus. CPU stands for Central Processing Unit, and MPU stands for Micro Processing Unit. The control unit 202 may include a plurality of processors such as a multi-core processor, and the plurality of processors may control the entire STA 102.

Further, the control unit 202 controls the function unit 203 to execute predetermined processes such as wireless communication, imaging, printing, and projection. The function unit 203 is hardware for the AP 101 to execute the predetermined processes.

The input unit 204 receives various operations from a user. The output unit 205 performs various outputs to the user via a monitor screen or a speaker. Here, the output by the output unit 205 may include display on the monitor screen, audio output by the speaker, vibration output, and the like. Both the input unit 204 and the output unit 205 may be implemented by one module such as a touch panel. The input unit 204 and the output unit 205 may be integrated with or separated from the STA 102.

The communication unit 206 controls wireless communication compliant with the IEEE 802.11be standard. The communication unit 206 may also control wireless communication compliant with, in addition to the IEEE 802.11be standard, any other IEEE 802.11 series standard or control wired communication such as wired LAN communication. The communication unit 206 controls the antenna 207 to transmit and receive a signal generated by the control unit 202 for wireless communication.

When the STA 102 supports the NFC standard, the Bluetooth standard, and the like in addition to the IEEE 802.11be standard, the communication unit 206 may control wireless communication compliant with these communication standards. When the STA 102 is capable of performing wireless communication compliant with a plurality of communication standards, the STA 102 may individually include a communication unit and an antenna for each of the communication standards. The STA 102 communicates data such as image data, document data, and video data to the STA 102 via the communication unit 206. The antenna 207 may be configured separately from the communication unit 206 or may be integrated with the communication unit 206 into a single module.

The antenna 207 is an antenna capable of communication in the 2.4 GHz band, the 5 GHz band, the 6 GHz band, the 45 GHz band, and the 60 GHz band. In the present embodiment, the STA 102 has two antennas. The STA 102 may have three antennas. Alternatively, the STA 102 may have different antennas for the respective frequency bands. When the STA 102 has a plurality of antennas, the STA 102 may include the communication unit 206 corresponding to each of the antennas.

The AP 101 has a hardware configuration similar to that of the STA 102.

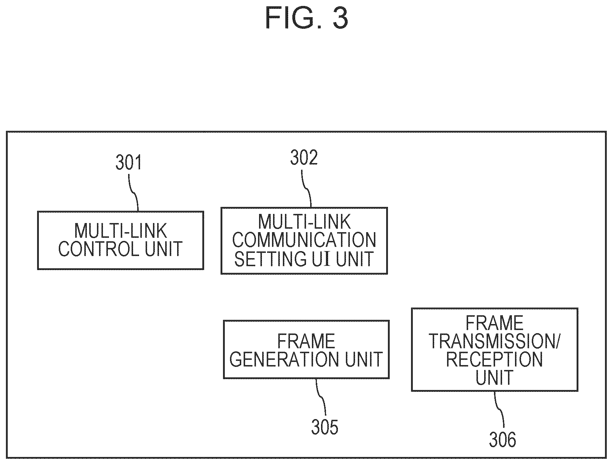

Fig. 3 is a block diagram of the functional configuration of the STA 102 according to the present embodiment. The AP 101 also has a similar configuration.

The STA 102 includes a multi-link control unit 301, a multi-link communication setting UI unit 302, a frame generation unit 305, and a frame transmission/reception unit 306.

The multi-link control unit 301 is a block that controls a communication start process for establishing one or more links used by the STA 102 for wireless communication with the AP 101, a process for adding or deleting a link after the start of communication, and a communication end process for deleting all the links. A connection process includes, specifically, Authentication processing, Association processing, and 4-Way-Hand-Shake (4WHS) processing.

The multi-link communication setting UI (User Interface) unit 302 is a block that provides a UI from an operation screen of the STA 102 to allow the user to input multi-link communication settings of the STA 102.

The frame generation unit 305 is a block that generates a frame for frame exchange when communicating with the connection destination AP.

The frame transmission/reception unit 306 transmits radio frames including a Probe Request frame and a data frame generated by the frame generation unit 305 and receives radio frames from the partner apparatus.

### (Process Flow)

Some embodiments, such as the flow of a process executed by the AP and the STA as described above and a sequence in a wireless communication system, will now be described.

### (Example 1)

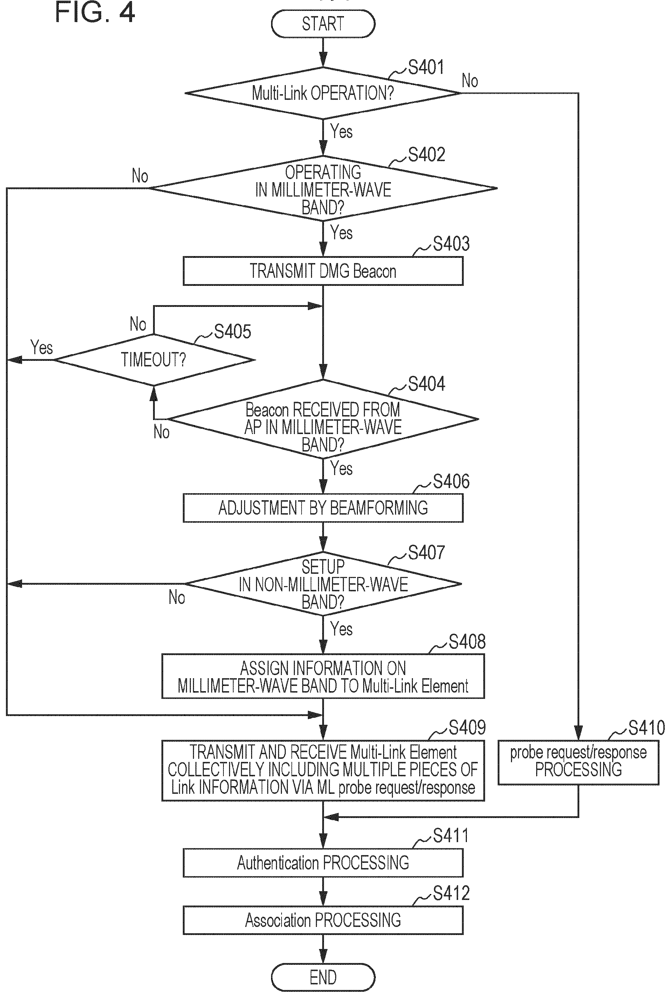

Fig. 4 is a flowchart illustrating the flow of a process performed by the control unit 202 executing a program stored in the storage unit 201 of the STA 102. The flowchart illustrates a process performed when the STA 102 connects to the AP 101. The process is started when the STA functions are activated, such as when power to the STA 102 is turned on, when the STA 102 receives an instruction to connect to the AP 101, or when the wireless functions are turned on.

It is confirmed whether the STA 102 performs Multi-Link operation (S401). This procedure may be determined by an instruction from the user or may be automatically implemented by an application or the OS.

If it is confirmed in S401 that the STA 102 does not perform Multi-Link operation, the STA 102 is connected to the AP through an existing connection process (S411) to perform data communication (S410).

If it is confirmed in S401 that the STA 102 performs Multi-Link operation, it is confirmed whether the STA 102 operates in the 45 GHz band or the 60 GHz band included in the millimeter-wave band (S402).

If it is confirmed in S402 that the STA 102 does not operate in the millimeter-wave band, the STA 102 collectively performs a connection process over a plurality of Links in a frequency band other than the millimeter-wave band as a Multi-Link connection process compliant with the IEEE 802.11be standard (S410).

If it is confirmed in S402 that the STA 102 operates in Multi-Link communication including millimeter-wave band communication, the STA 102 transmits a DMG (Directional Multi-Gigabit) Beacon (S403). The transmission of the DMG Beacon in S403 may be omitted. The DMG Beacon is a Beacon to be communicated in the millimeter-wave band, and is mainly used to determine a sector number described below. The processing of S403 and S404 may be performed in the processing of S406 described below.

Next, it is determined whether a Beacon or a DMG Beacon is received from the AP MLD operating in the millimeter-wave band (S404). The order of S403 and S404 may be reversed.

If it is determined in S404 that no Beacon or DMG Beacon is received from the AP in the millimeter-wave band, in S405, it is determined whether a timeout has occurred (S405). If it is determined in S405 that a timeout has occurred, the process proceeds to S409, and the STA 102 executes a connection process for Multi-Link communication using a frequency band other than the millimeter-wave band. Then, the flowchart ends.

If it is determined in S404 that a Beacon or a DMG Beacon is received, beamforming training is performed using the received Beacon or DMG Beacon (S406). Since the millimeter-wave band has high directivity, adjustment of radio waves by beamforming is essential for execution of communication with the partner apparatus. Accordingly, when a frequency channel on at least one of the links via which Multi-Link communication is performed includes the millimeter-wave band, some radio wave transmission and reception in the millimeter-wave band is essential even if the connection process for a plurality of links is collectively performed over one link. In S409, therefore, the connection process for Links in non-millimeter-wave bands is also collectively performed over a channel in the millimeter-wave band to be used is used. This can reduce connection processes scheduled to be performed in the other bands. In addition, due to the high directivity, the millimeter-wave band is a frequency band that is easy to disconnect when the relative positions of the AP 101 and the STA 102 move. Thus, the connection process is performed in the millimeter-wave band, thereby making it possible to reduce the risk of no connection in the other frequency bands.

In the millimeter-wave band, the range within which radio waves reach is limited compared to the 2.4 GHz band, the 5 GHz band, the 6 GHz band, and the like. Thus, a situation may occur in which radio waves reach in bands other than the millimeter-wave band, but do not reach in the millimeter-wave band. For this reason, if the connection process is performed in a frequency band other than the millimeter-wave band, it may be impossible to perform communication in the millimeter-wave band during Multi-Link communication. Accordingly, in a connection process for Multi-Link communication, if the connection process is implementable using a link via a frequency channel in the millimeter-wave band, it is desirable to use the link to collectively perform the connection process for a plurality of links. Thus, No may always be selected in S407. Conversely, when priority is given to connection to the partner apparatus, Yes is selected in S407. S406 is assumed to be an adjustment phase for determining a sector to be used by the AP 101 through training.

The term "sector" is used to check the relative positions of the AP 101 and the STA 102, and refers to a value assigned to each physical direction in which the AP 101 emits radio waves.

Control for selecting an optimal antenna between communication partners is performed in two stages, namely, SLS (Sector-level sweep) and BRP (Beam Refinement Protocol). SLS has four elements, that is, an ISS (Initiaotor Sector Sweep), an RSS (Responder Sector sweep), an SSW (Sector sweep) Feedback, and an SSW ACK. An Initiator performs the ISS, and a Respnder performs the RSS. Either the AP 101 or the STA 102 may be the Initiator or the Respnder. In the present embodiment, the AP 101 is the Initiator.

The detailed processing of S406 is given below. The processing of S406 may include the processing of S403 and S403.

First, the Initiator (the AP 101) transmits a DMG Beacon frame or an SSW frame to the Responder (the STA 102) in the ISS. Here, the Initiator transmits the frame while changing the sector number and the physical transmission direction (antenna transmission pattern of radio waves) of the frame. There are two types of sector numbers, namely, TXSS (Transmit Sector Sweep) and RXSS (Receive Sector Sweep) that can handle sector numbers for transmission and reception, respectively. What the Initiator transmits in the ISS is the sector number handled in the TXSS.

When receiving the frame from the Initiator, the Responder selects a sector number that is an antenna pattern with the best reception sensitivity. Thereafter, the Responder transmits the selected sector number and the sector number of the Responder to the Initiator. The Responder may transmit one or more frames in the RSS. In the case of transmission of a plurality of frames, the Responder transmits the plurality of frames to the Initiator while changing the sector number and the physical transmission direction in a way similar to that of the Initiator. After each of the Initiator and the Responder receives a sector number from the other and selects a sector number, the Initiator transmits an SSW Feedback and determines a sector number that is an antenna pattern with the best reception sensitivity. When receiving the SSW Feedback, the Responder responds with an SSW ACK.

After that, a more detailed antenna pattern may be defined by a BRP (Beam Refinement Protocol). Through the transmission and reception of a BRP frame, the AP 101 and the STA 102 can obtain an SNR (Singal to Noice Ratio) and a Channel Measurement Feedback and fine-tune the antenna pattern. The implementation of the BRP is optional since the BRP is implemented only when necessary.

After the selection of an antenna pattern with good reception sensitivity by beamforming is completed, information on the antenna pattern and Capability information to be used in the millimeter-wave band are assigned to a Multi-Link Element (S408). When Multi-Link setup is to be collectively performed in the millimeter-wave band, the information acquired in S406 is not assigned to the Multi-Link Element, but Link information of the other bands is assigned to the Multi-Link Element (S408). In a case where Multi-Link setup is to be performed over a link using a frequency channel in the millimeter-wave band, an ML Probe Request and Response are transmitted and received by radio wave transmission based on the result of the adjustment by beamforming.

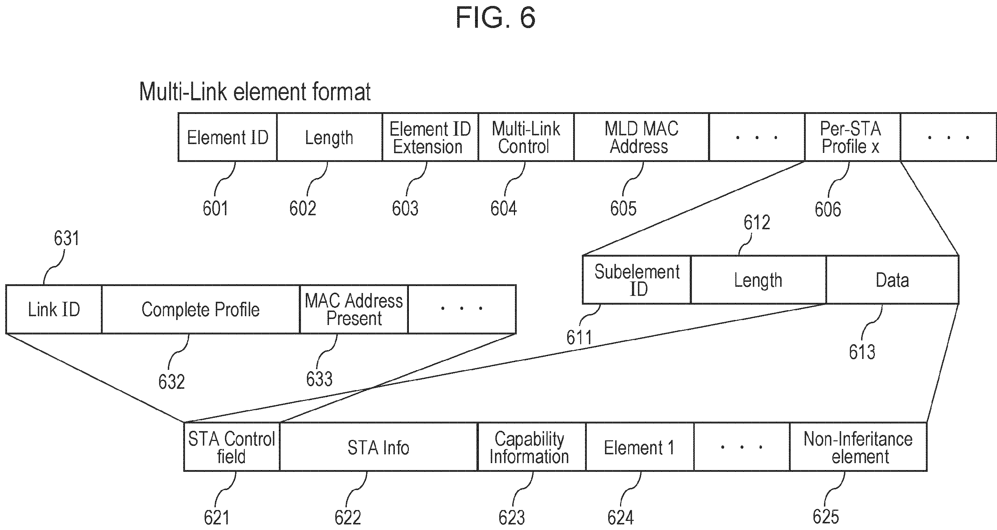

Fig. 6 illustrates an example configuration of the Multi-Link Element to which the information acquired in S406 is assigned. The information acquired in S406 may be information on an optimal antenna pattern, results of radio wave measurements on the channel, or the like. When a Probe Request, a Probe Response, an ML Probe Request, or an ML Probe Response is to be transmitted via a link in the millimeter-wave band, the information acquired by beamforming is included in the preamble of the PHY of the frame described above before the frame is transmitted. Alternatively, the frame described above is transmitted in a period determined in S406 according to the information acquired by beamforming. Further, the Multi-Link Element is assigned to the frame described above to be transmitted reflecting the result of the adjustment in S406.

The Multi-Link Element includes an Element ID 601, a Length 602, an Element ID Extension 603, a Multi-Link Control 604, an MLD MAC Address 605, and a Per-STA Profile 606. In the present embodiment, only a number of Per-STA Profiles 606 equal to Link - 1 are present.

The Element ID 601 and the Element ID Extension 603 indicate that the Element is a Multi-Link Element. The Length 602 indicates the length of the entire Multi-Link Element.

The Multi-Link Control 604 includes a bitmap indicating what information is included in a Common Info Field described below, and a Type field indicating the type of the Multi-Link Element.

The fields from the MLD MAC Address 605 up to the field preceding the Per-STA Profile 606 include information common to the established links. Further, it is determined, based on a value indicated by the Multi-Link Control, whether the MLD MAC Address 605 and the Per-STA Profile 606 are included in the Multi-Link Element.

For the Per-STA Profile 606, it is determined whether the field 606 is included in the Multi-Link Element, based on the type of Type in the Multi-Link Control 604 described above.

The Per-STA Profile 606 contains information for each Link.

The Per-STA Profile 606 includes a Subelement ID 611, a Length 612, and Data 613. The Data 613 contains details of information for each Link given below.

The Data 613 includes a STA Control field 621, STA Info 622, Capability Information 623, Element 1 624, and a Non-Inferitance element 625.

The STA control field 621 includes a Link ID 631, a Complete Profile 632, and a MAC Address Present 633. The Link ID 631 specifies the Link number. For example, in the present embodiment, the Link ID 631 specifies 1 to indicate the Link 103 in Fig. 1, and specifies 2 to indicate the Link 104.

The Complete Profile 632 includes a flag indicating whether to include all the information regarding the Link. For example, when the STA 102 is to respond to obtain all the information regarding the Link of the AP 101, the value of the Complete Profile 632 is set to 1, and all the information on the Link is included in the field that follows the 622.

For example, consideration is given to the assignment of the Multi-Link Element on a link via a frequency channel in the millimeter-wave band. The link 103 in Fig. 1 operates at 5 GHz. Thus, the link 103 and the link 104 are different in terms of the Element assigned to the Beacon or the Probe Request/Probe Response. The link 103 transmits the following information. That is, a Supported Rates Element, a DS Parameter set Element, a Power Constraint element, an HT Capabilities Element, an HT Information Element, an Extended Capabilities element, a VHT Capabilities element, and a VHT Operation Element are assigned to the field that follows the Element 1 624 described below as information specific to the 5 GHz band. Even if the value of the Complete Profile 632 is 1, any element common to the other Links may be omitted. Also, information that does not need to be notified before the connection may be omitted. When the Complete Profile 632 is set to 0, some or all of the Elements to be included in the Element 1 field 624 may be omitted. The field that follows the MAC Address Present 633 indicates an additional field that is present in the field indicated by the subsequent field, that is, the STA Info 622.

In the present embodiment, the Complete Profile 632 = 0 is set for the Probe Request/Response, and the Complete Profile 632 is set to 1 for the ML Probe Request/Response.

The fields from the Element 1 624 up to the field preceding the Non-Inferitance element 625 are assigned Elements specific to each Link.

Consideration is given to a case where the Multi-Link Element described above is assigned for 5 GHz in the present embodiment and information on the millimeter-wave band is assigned in the Element 1 field 624.

For example, an Antenna Sector ID Pattern element, which is defined in IEEE 802.11, may be assigned to the Element 1 field as an Element to which the information acquired in S406 is assigned. The sector number selected in the SLS is assigned to the Antenna Sector ID Pattern Element. The sector number is the information acquired in S406.

For example, any one of a Wakeup Schedule Element, an Extended Schedule Element, and a STA Availability Element may further be added. Any one of a DMG TSPEC Element, a Next DMG ATI Element, a DMG Capabilities Element, a DMG Operation Element, a DMG BSS Parameter Change Element, and a DMG Beam Refinement Element may further be added. Any one of a Channel Management Feedback Element, an Awake Window Element, a Next PCP List Element, a PCP Handover Element, and a DMG Link Margin Element may further be added. Any one of a Switching Stream Element, a Session Transition Element, a Dynamic Tone Pairing Report Element, and a Cluster Report Element may further be added. Any one of a Relay Capabilities Element, a Relay Transfer Parameter Set Element, and a BeamLink Maintenance Element may further be added. Any one of a DMG Link Adaptation Acknowledgment Element, an ECPAC Policy Element, a Cluster Time Offset Element, and a Channel Measurement Feedback Element may further be added. Any one of an EDMG Capabilities Element, an EDMG Operation Element, a QoS Triggered Unschedules Element, and an Unsolicited Block Ack Extension Element may further be added. Any one of a TDD Slot Structure Element, a TDD Slot Schedule Element, and a TDD Route Element may further be added.

Further consideration is given to an Element that can be assigned to the Element 1 field 624 and that can be assigned for the 5 GHz band and the millimeter-wave band in common.

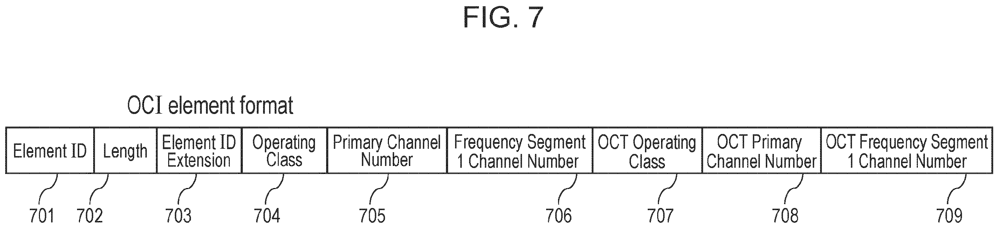

An OCI (Operating Channel Information) Element illustrated in Fig. 7 may be assigned to the Element 1 field to indicate on which channel the Link indicated by the Link ID 631 field is operating. The OCI Element is an Element to indicate the currently operating channel number.

The OCI Element includes an Element ID 701, a Length 702, an Element ID Extension 703, an Operating Class 704, a Primary Channel Number 705, a Frequency Segment 1 Channel Number 706, and an OCT Operating Class 707, an OCT Primary Channel Number 708, and an OCT Frequency Segment 1 Channel Number 709, which are Optional.

The Operating Class 704 can indicate the operating class of the channel. In the present embodiment, the operation is performed in the 45 GHz band, and thus, for example, the value of the Operating Class 704 is set to 183.

The Primary Channel Number 705 can indicate a channel number, and indicates one channel number selected from the channel numbers that can be indicated in the class indicated by the Operating Class 704. For example, the value may be set to 1 when the operation is being performed on channel 1.

Assigning the OCI Element to the Element 1 field can indicate the Operating Class and channel number operating on the Link indicated by the Link ID 631.

With reference back to Fig. 4, the Multi-Link Element in which information for each Link is assigned to the Per-STA Profile field 606 is transmitted to the partner apparatus via ML Probe Request, and thus, information specific to the Link can be notified to the partner. The AP 101 transmits the ML Probe Response to the partner apparatus (S409).

Thereafter, the connection process is performed through Authentication processing (S411) and Association processing (S412), and the flowchart ends. After that, a 4-way handshake and a Group key exchange may be performed to exchange keys for encryption before the connection is made.

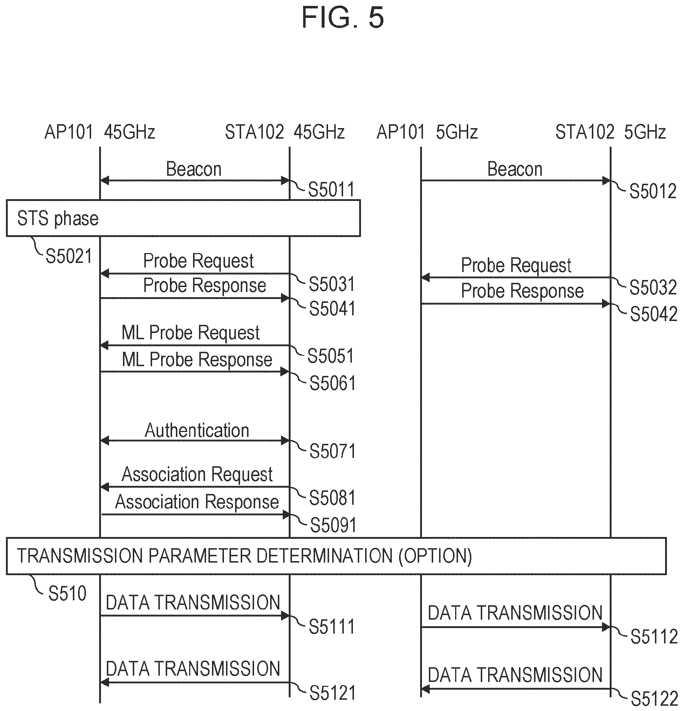

Fig. 5 depicts a sequence illustrating communication between the AP 101 and the STA 102 based on the processing of S403 and the subsequent processing in Fig. 4.

The AP 101 transmits a DMG Beacon in the 45 GHz band in the millimeter-wave band and in the 5 GHz band outside the millimeter-wave band (S5011 and S5012). The STA 102 also transmits a Beacon in the 45 GHz band (S5011). The transmission of a DMG Beacon from the STA 102 may be omitted. In response to the transmission and reception of the DMG Beacon, SLS (Sector level Sweep) is performed (S5021) in the 45 GHz band to determine the relative positions of the AP 101 and the STA 102. Based on these values, a Probe Request (S5031) and a Probe Response (S5041) are communicated in the 45 GHz band.

Also in the 5 GHz band, a Probe Request (S5032) and a Probe Response (S5042) are performed in a similar manner. However, it is sufficient that Probe Request/Response communication be performed at least in the millimeter-wave band.

Subsequently, an ML Probe Request (S5051) and an ML Probe Response (S5061) are transmitted and received to obtain information on each Link. In S5051 and S5061, frame exchange is performed to obtain Link information that has failed to be acquired via the Probe Response. For example, in a case where one or more connections have been made before the current connection and parameters have been exchanged during the first connection, the frame exchange in S5051 and S5061 need not be performed. It is assumed that the Multi-Link Element illustrated in Fig. 6 is assigned via the ML Probe Request (S5051) and the ML Probe Resopnse (S5061) and that a Response is returned with the Complete Profile set to 1. The Multi-Link Element itself may be assigned via the Probe Request (S5031) and the Probe Response (S5041). In the present embodiment, it is assumed that the connection sequence after the ML Probe Request (S5051) is performed at 45 GHz.

Next, Authentication (S5071) is carried out to perform authentication between the AP 101 and the STA 102. Further, parameters are exchanged to establish a connection via Association Request (S5081) and Association Response (S5091). Transmission parameters for the connection are determined based on the exchanged parameters (S510). In S5010, a 4-way handshake may be performed for communication encryption. After the mutual authentication and key exchange for encryption are completed, data communication is started (S5111, S5121, S5112, and S5122).

The present embodiment enables a connection process for Multi-Link communication to be performed using a frequency channel in the millimeter-wave band. In addition, in Multi-Link communication including millimeter-wave band communication, the connection process for a plurality of links can be collectively performed over one Link.

### (Other Embodiments)

The present embodiment describes Multi-Link communication in which a plurality of links are established via the 45 GHz band and the 5 GHz band, but is not limited to this. It is sufficient that one or both of bands used for links established in Multi-Link communication use the millimeter-wave band. In other words, the present embodiment presents an example in which the 45 GHz band is used as the millimeter-wave band, but the 60 GHz band may be used instead. Instead of the 5 GHz band presented in the present embodiment, the 2.4 GHz band, the 6 GHz band, the Sub1 GHz band, the 45 GHz band, or the 60 GHz band may be used.

A recording medium storing a program code of software for implementing the functions described above may be supplied to a system or an apparatus, and a computer (CPU or MPU) in the system or apparatus may read and execute the program code stored in the recording medium. In this case, the program code read from the storage medium implements the functions of the embodiment described above, and the storage medium storing the program code constitutes the apparatus described above.

The storage medium for supplying the program code may be, for example, a flexible disk, a hard disk, an optical disk, a magneto-optical disk, a CD-ROM, a CD-R, a magnetic tape, a non-volatile memory card, a ROM, a DVD, or the like.

The program code read by the computer is executed to implement the functions described above. In addition, an OS operating on the computer may perform some or all of the actual processes based on the instructions of the program code to implement the functions described above. OS stands for Operating System.

Further, the program code read from the storage medium is written in a memory included in a function expansion board inserted in the computer or a function expansion unit connected to the computer. Based on the instructions of the program code, a CPU included in the function expansion board or the function expansion unit may perform some or all of the actual processes to implement the functions described above.

The present invention may also be implemented by processing in which a program for implementing one or more functions of the embodiment described above is supplied to a system or an apparatus via a network or a storage medium and one or more processors in a computer of the system or the apparatus read and execute the program. The present invention may also be implemented by circuitry (e.g., an ASIC) that implements the one or more functions.

The present invention is not limited to the embodiment described above, and may be changed and modified in various ways without departing from the spirit and scope of the present invention. Accordingly, to apprise the public of the scope of the present invention, the following claims are made.

This application is based upon and claims the benefit of priority from Japanese Patent Application No. 2022-125086 filed August 4, 2022, the disclosure of which is incorporated herein in its entirety by reference.

### Reference Signs List

- 201: storage unit
- 202: control unit
- 203: function unit
- 204: input unit
- 205: output unit
- 206: communication unit

## Claims

1. A communication apparatus comprising:
establishment means for establishing a plurality of links in parallel between the communication apparatus and an other communication apparatus via a plurality of different frequency channels; and
transmission means for transmitting a predetermined frame to the other communication apparatus, wherein
the establishment means establishes at least one of the plurality of links via a frequency channel in a millimeter-wave band.

2. The communication apparatus according to Claim 1, wherein
the transmission means transmits the predetermined frame via a predetermined frequency channel in the millimeter-wave band.

3. The communication apparatus according to Claim 1, wherein
the predetermined frame includes predetermined information regarding a predetermined link to be established by the establishment means via the frequency channel in the millimeter-wave band.

4. The communication apparatus according to Claim 1, further comprising
execution means for executing a process related to beamforming of communication with the other communication apparatus when the establishment means establishes a link via the frequency channel in the millimeter-wave band, wherein
the predetermined frame further includes information regarding the beamforming.

5. The communication apparatus according to Claim 4, wherein
the process related to the beamforming is a process for selecting an antenna for communicating with the other communication apparatus.

6. The communication apparatus according to Claim **5,** wherein
the information is included in a Multi-Link Element of the predetermined frame.

7. The communication apparatus according to Claim **5,** wherein
the predetermined frame is a Probe Request frame compliant with an IEEE 802.11 standard series.

8. The communication apparatus according to Claim 5, wherein
the predetermined frame is an Association Request frame compliant with an IEEE 802.11 standard series.

9. The communication apparatus according to Claim 5, wherein
the predetermined frame is an ML (Multi-Link) Probe Request frame compliant with an IEEE 802.11 standard series.

10. A communication apparatus comprising:
selection means for selecting a predetermined link for performing an establishment process for establishing a first link and a second link, based on a frequency for the first link and a frequency for the second link; and
establishment means for performing a connection process with an other communication apparatus via the predetermined link selected by the selection means to establish the first link and the second link in parallel between the communication apparatus and the other communication apparatus.

11. The communication apparatus according to Claim 10, wherein
the selection means selects, as the predetermined link, a link having a higher frequency among the first link and the second link.

12. The communication apparatus according to Claim 10, wherein
when the first link is a link via a frequency channel in a millimeter-wave band, and
the second link is a link via a frequency channel in a frequency band that is not the millimeter-wave band,
the selection means selects the first link as the predetermined link.

13. The communication apparatus according to any one of Claim 10 or Claim 12, wherein
the millimeter-wave band is a 45 GHz band or a 60 GHz band.

14. A method for controlling a communication apparatus, the method comprising:
an establishment step of establishing a plurality of links in parallel between the communication apparatus and an other communication apparatus via a plurality of different frequency channels; and
a transmission step of transmitting a predetermined frame to the other communication apparatus, wherein
the establishment step establishes at least one of the plurality of links via a frequency channel in a millimeter-wave band.

15. A method for controlling a communication apparatus, the method comprising:
a selection step of selecting a predetermined link for performing an establishment process for establishing a first link and a second link, based on a frequency for the first link and a frequency for the second link; and
an establishment step of performing a connection process with an other communication apparatus via the predetermined link selected in the selection step to establish the first link and the second link in parallel between the communication apparatus and the other communication apparatus.

16. A program for causing a computer to perform the method for controlling a communication apparatus according to Claim 14 or Claim 15.
